# EUROPÄISCHE PATENTSCHRIFT

(11) **EP 2 714 449 B1**
(45) Veröffentlichungstag und Bekanntmachung des Hinweises auf die Patenterteilung: **22.04.2015**
(21) Anmeldenummer: 12710239.0
(22) Anmeldetag: 20.03.2012
(51) Int. Cl.: B60K 11/00, B60K 1/00

(54) **VORRICHTUNG ZUM ANTRIEB EINES FAHRZEUGS**
APPARATUS FOR DRIVING A VEHICLE
APPAREIL DE CONDUITE D'UN VÉHICULE

(30) Priorität: 25.05.2011 DE 102011076437
(43) Veröffentlichungstag der Anmeldung: 09.04.2014
(73) Patentinhaber: ZF Friedrichshafen AG, 88038 Friedrichshafen (DE)
(72) Erfinder: MAIR, Ulrich, 88046 Friedrichshafen (DE); HEIMANN, Jens, 88719 Stetten (DE)
(86) Internationale Anmeldenummer: PCT/EP2012/054881
(87) Internationale Veröffentlichungsnummer: WO 2012/159797

(56) Entgegenhaltungen:
- WO-A1-2005/005189
- US-A1- 2011 042 159

## Beschreibung

Die vorliegende Erfindung befasst sich mit einer Vorrichtung zum Antrieb eines Fahrzeugs, umfassend zumindest zwei Elektromotoren, wobei jeder der zumindest zwei Elektromotoren mit einer Kühlvorrichtung versehen ist und die Kühlvorrichtung zumindest eine Kühlfluidleitung umfasst, nach dem Oberbegriff des ersten unabhängigen Anspruchs 1. Weiterhin befasst sich die vorliegende Erfindung mit einem Fahrzeug umfassend zumindest zwei Elektromotoren nach dem unabhängigen Anspruch 10.

Vermehrt werden Elektromotoren verwendet, um Fahrzeuge anzutreiben. Dabei sind sowohl Fahrzeuge üblich, in denen Elektromotoren zusammen mit Motoren anderer Bauart, wie Verbrennungsmotoren, für den Antrieb sorgen, als auch Fahrzeuge in denen allein Elektromotoren zum Antrieb verwendet werden.

Im Zuge der Weiterentwicklung und der daraus bedingten geringeren Ausmaße der Elektromotoren wird es möglich, anstatt eines starken zentral angeordneten Elektromotors, welcher zumindest auf eine Antriebsachse wirkt, mehrere kleinere Elektromotoren zu verwenden, so dass jedem Antriebsrad ein Elektromotor zugeordnet werden kann. Diese Elektromotoren können in der Nähe des entsprechenden Antriebsrades platziert werden und so kann die Strecke, über welche die Kraft vom Antriebsmotor auf das Antriebsrad übermittelt werden muss, kurz gehalten werden.

Da diese Elektromotoren neben der zum Antrieb des Fahrzeugs geeigneten Bewegungsenergie auch Wärme produzieren, ist es notwendig, die Motoren zu kühlen, um eine Schädigung des Motors zu verhindern. Zur Kühlung werden Kühlvorrichtungen verwendet, welche die vom Elektromotor abgegebene Wärme aufnehmen und vom Elektromotor entfernen. So wird beispielsweise ein Kühlfluid mittels einer Pumpe an den Elektromotor geführt, das Fluid vom Elektromotor erwärmt und so die Abwärme des Elektromotors durch das Fluid zumindest teilweise aufgenommen. Das so erwärmte Kühlfluid wird von dem Elektromotor weg bewegt und so die Abwärme von dem Elektromotor entfernt und der Elektromotor gekühlt.

So wird ein Überhitzen des Motors verhindert und der Elektromotor kann über lange Zeit mit hoher Leistung betrieben werden.

Ein Elektroantrieb der genannten Art ist in der WO2005/005189 offenbart. Dort sind Radnabenmotoren in die Radköpfe einer Starrachse für Omnibusse oder Flurförderfahrzeuge integriert und mit eine Motorkühlung ausgestattet, die zusätzlich über die Lagerung in den Radköpfen realisiert ist.

Um eine kontrollierte Versorgung des Elektromotors mit Kühlfluid zu gewährleisten, wird das Kühlfluid in der Regel mittels einer oder mehreren Kühlfluidzuleitungen an den Elektromotor gebracht und mittels einer Kühlfluidableitung zurück in ein Reservoir geführt. Aus dem Reservoir kann wiederum die Kühlfluidentnahme mittels der Kühlfluidzuleitung erfolgen. Die Abkühlung des Kühlfluids kann dabei im Kühlfluidreservoir oder in den Kühlfluidzuleitungen oder -ableitungen stattfinden. Auch ist ein separater Kreislauf zur Abkühlung des Kühlfluides denkbar. An dem Elektromotor wird das Kühlfluid durch den Elektromotor erwärmt. solche Kühlvorrichtungen umfassend zum Beispiel eine Kühlfluidzuleitung, eine Kühlfluidableitung, eine Kühlfluidpumpe, einen Wärmeaustauschbereich zur Aufnahme der Wärme durch das Kühlfluid und ein Kühlfluidreservoir zur Bereitstellung des Kühlfluids. Solche Kühlvorrichtungen stellen jedoch ein zusätzliches Gewicht dar und benötigen zusätzlichen Bauraum, wodurch die Gesamtausmaße und das Gesamtgewicht des Antriebs und damit des gesamten Fahrzeugs zunehmen.

Aufgabe der vorliegenden Erfindung ist es, einen elektrischen Fahrzeugantrieb bereitzustellen, der eine geringere Bauhöhe benötigt und/oder weniger Einzelteile aufweist und/oder kostengünstiger zu produzieren und/oder einzubauen ist.

Gelöst wird diese Aufgabe durch eine Vorrichtung nach Anspruch 1 und 10. Bevorzugte Ausführungsformen finden sich in den Unteransprüchen.

Die Aufgabe kann durch eine Vorrichtung zum Antrieb eines Fahrzeugs gelöst werden, wobei die Vorrichtung zumindest zwei Elektromotoren aufweist und jeder der zumindest zwei Elektromotoren durch jeweils zumindest eine Kühlvorrichtung mit zumindest einer Kühlfluidleitung gekühlt wird. Dabei sind die Kühlfluidleitungen der zumindest zwei Kühlvorrichtungen über eine Kühlfluidverbindungsleitung verbunden, durch welche Kühlfluid von der einen Kühlfluidleitung in die andere Kühlfluidleitung strömt. So wird es möglich, zur Kühlung für mehrere Elektromotoren einzelne Elemente, wie Pumpen, Kühlfluidleitungen und/oder Kühlfluidreservoirs gemeinsam zu nutzen.

Die Kühlvorrichtung weist dabei einen Wärmeaustauschbereich auf, in dem die Wärme des Elektromotors auf das Kühlfluid übertragen wird.

Der Wärmeaustauschbereich kann dabei ein oder mehrere Kühlleitungen aufweisen, die zum Beispiel parallel zueinander den Elektromotor an zumindest den Seitenflächen umspannen. Jedoch können die Kühlleitungen auch winklig zueinander angeordnet sein und/oder netzartig an dem Elektromotor verlaufen. Auch ist es möglich flächige Strukturen, wie Hohlräume zu schaffen, in denen das Kühlfluid um den Elektromotor strömt. Die innere Oberfläche des Wärmeaustauschbereiches kann dabei dadurch vergrößert werden, indem von einem kreisförmigen Querschnitt abgewichen wird. Insbesondere sind auch Kühlrippen vorgesehen, die in den Hohlraum hineinragen und sich längs, quer oder winklig zur Strömungsrichtung des Kühlfluids erstrecken. Bevorzugt wird der Wärmeaustauschbereich durch das Elektromotorengehäuse gebildet.

Die Verwendung einer Kühlfluidverbindungsleitung spart sowohl Gewicht, da darauf verzichtet werden kann, jeweils zwei Kühlfluidleitungen pro Elektromotor zu der eventuell entfernt angeordneten Kühlfluidpumpe bzw. dem Kühlfluidreservoir zu verwenden. Außerdem ermöglicht dies Kühlvorrichtungen mit einem geringeren Raummaß, so dass diese Kühlvorrichtungen und damit auch die Elektromotoren einfacher radnah untergebracht werden können. Auch wird durch den Wegfall zusätzlicher Kühlfluidleitungen die Gefahr verringert, dass diese Kühlfluidleitungen undicht werden und eine ausreichende Kühlung der Elektromotoren nicht mehr zur Verfügung gestellt werden kann.

Unter einem Kühlfluid wird eine Flüssigkeit und/oder ein Gas verstanden, das sich eignet, Wärme aufzunehmen und zu transportieren. Solche Kühlfluide können umfassen: Wasser, Luft und/oder Thermalöl, Glykol, etc.

Bevorzugt sind die zumindest zwei Elektromotoren an einem Verbundlenker angeordnet. Ein Verbundlenker besteht dabei aus zumindest zwei Längslenkern, an denen je ein Rad angeordnet ist und einem Querträger, der die beiden Längslenker miteinander verbindet. Ein Längslenker ist dabei ein Bauteil, das sich zumindest in etwa parallel zur Längsachse des Fahrzeugs erstreckt und flexibel mit der Karosserie und dem Rad verbunden ist. Ein Querträger ist dabei ein Bauteil, welches die beiden Längsträger miteinander verbindet, wobei die Kontaktstellen zwischen dem Querträger und den Längslenkern jeweils beabstandet zur Karosserie sind. Dabei liegt die Hauptausbreitungsrichtung der Längslenker parallel zu der Fahrzeuglängsachse, die Hauptausbreitungsrichtung des Querträgers ist entsprechend dazu quer angeordnet. Solche Verbundlenker werden insbesondere für die Hinterachse verwendet und ermöglichen eine leichte Montage und Demontage der ganzen Achse, einen geringen Raumbedarf und weisen nur wenige Bauteile auf. Die Anordnung der Elektromotoren an dem Verbundlenker ermöglicht es, die Elektromotoren fest relativ zu den Rädern anzuordnen, so dass es zu keiner Positionsverschiebung der Antriebsräder bezüglich den Elektromotoren durch die Federbewegung kommt.

Bevorzugt ist die Kühlfluidverbindungsleitung an dem Querträger angeordnet. So kann der Querträger, der die beiden Längslenker miteinander verbindet, mit der Kühlfluidverbindungsleitung verbunden werden, um die Kühlfluidverbindungsleitung zu halten und/oder zu stützen. So können weniger stabile, dünnwandigere und insbesondere leichtere Kühlfluidverbindungsleitungen verwendet werden, was zu einem weiteren Gewichtsvorteil führt. Insbesondere kann die Kühlfluidverbindungsleitung mit dem Querträger verschweißt, verschraubt und/oder verklebt werden. Insbesondere kann die Kühlfluidverbindungsleitung zumindest teilweise zumindest im Wesentlichen parallel zum Querträger verlaufen.

Auch kann die Kühlfluidverbindungsleitung in dem Querträger angeordnet sein, so dass der Querträger zumindest teilweise die Kühlfluidverbindungsleitung umschließt. So kann durch den stabil ausgearbeiteten Querträger die Kühlfluidverbindungsleitung vor Beschädigung geschützt werden. Auch kann so die Kühlfluidverbindungsleitung weniger Gewicht aufweisen, da es möglich ist, dünnere und somit leichtere Wände zu verwenden.

Insbesondere ist die Kühlfluidverbindungsleitung den Querträger gebildet, wodurch separate Kühlfluidverbindungsleitungswände überflüssig werden und so die Kühlfluidverbindungsleitung mit noch weniger Gewicht gebildet werden kann.

Der Querträger kann dabei aus Metall, wie Stahl, und/oder anderen Materialien, wie Kunststoff, GFK und/oder CFK. Solche Materialien haben eine genügend hohe Widerstandskraft um einerseits als Fluidleiter verwendet zu werden, andererseits ermöglichen diese Materialien Querträger mit niedrigem Gewicht.

Die Längslenker werden größtenteils durch die Elektromotoren das Gehäuse der Elektromotoren gebildet, so dass der Querträger bevorzugt im Bereich des Gehäuses der Elektromotoren mit den Längslenkern verbunden ist.

Bevorzugt sind die zumindest zwei Elektromotoren mit einer Kühlfluidleitung versehen, die einen Kühlfluideingang und einen Kühlfluidausgang aufweisen und der Kühlfluideingang der Kühlfluidleitung des einen Elektromotors mit dem Kühlfluidausgang der Kühlfluidleitung des anderen Elektromotors über die Kühlfluidverbindungsleitung verbunden ist. So kann das Kühlfluid über den Kühlfluideingang in die Kühlvorrichtung des ersten Motors eingeleitet werden, dort die Wärme des Elektromotors aufnehmen und über den Kühlfluidausgang in die Kühlfluidverbindungsleitung transportieren. Aus der Kühlfluidverbindungsleitung wird das Kühlfluid in den Kühlfluideingang der Kühlvorrichtung des anderen Elektromotors zugeführt. Durch die Kühlfluidverbindungsleitung, die gleichzeitig auch als Querträger ausgebildet sein kann, wird eine weitere Zuleitung an den zweiten Elektromotor und eine Kühlfluidableitung vom ersten Elektromotor eingespart und so die Anzahl der verwendeten Bauteile weiter reduziert. Bevorzugt kann die Kühlfluidverbindungsleitung Kühlelemente zur Kühlung des Kühlfluids aufweisen. Solche Kühlelemente können einerseits aktive Kühlelemente wie Peltierelemente sein, auf der anderen Seite auch passive Kühlelemente wie Kühlrippen, etc. sein, welche beispielsweise an der Außenseite der Kühlfluidverbindungsleitung angeordnet sind. Die Kühlrippen können aus Metall, wie Stahl oder Kupfer sein, so dass die Wärme des Kühlfluids teilweise an den Fahrtwind abgegeben wird. So kann das Kühlfluid in der Kühlfluidverbindungsleitung z. B. durch den Fahrtwind gekühlt werden, bevor es in die Kühlvorrichtung des zweiten Elektromotors geleitet wird. So kann mittels einer entsprechenden Ausgestaltung des Querträgers eine separate Kühlvorrichtung zur Kühlung des Kühlfluids vor Eintritt in den Wärmeaustauschbereich des zweiten Elektromotors eingespart werden.

Im Weiteren wird die Erfindung anhand eines Ausführungsbeispiels unter Zuhilfenahme der Zeichnungen weiter erläutert. In den Zeichnungen zeigt
- Fig. 1: einen Verbundlenker nach dem Stand der Technik;
- Fig. 2: einen Verbundlenker mit daran angeordneten Elektromotoren; und
- Fig. 3: einen Teilausschnitt eines Verbundlenkers nach Fig. 2 im Ausschnitt.

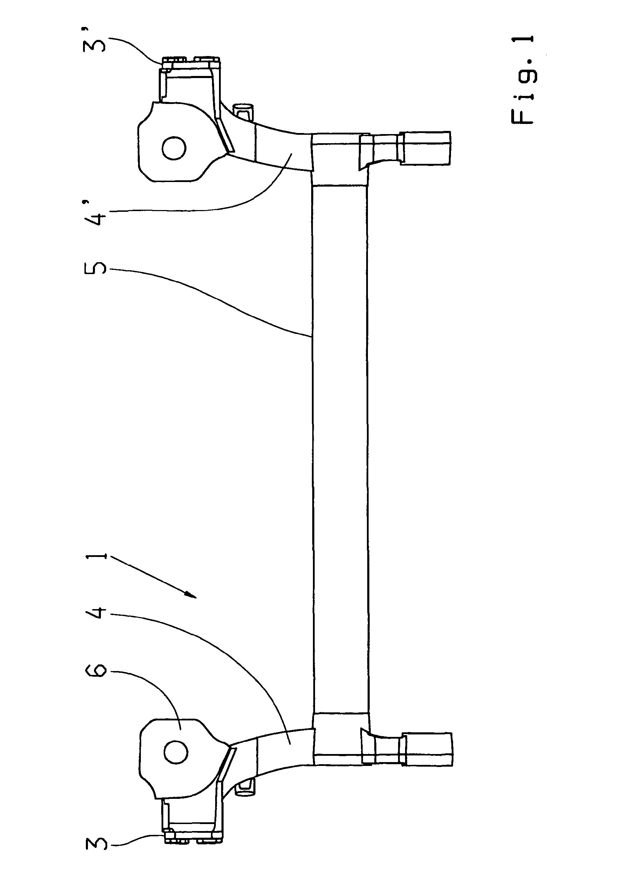

Fig. 1 zeigt einen Verbundlenker 1, wie er als Hinterachse in Kleinfahrzeugen verwendet werden kann. Der Verbundlenker 1 verbindet hält die beiden Räder 2, 2' und erlaubt dabei das Einfedern der Räder 2, 2'. Die Räder 2 sind dabei an den Längslenkern 4 drehbar befestigt. Weiter umfasst der Verbundlenker 1 einen Querträger 5, welcher die beiden Längslenker 4, 4' miteinander verbindet und somit die Radposition stabilisiert. Der Querträger 5 schließt dabei in etwa einen rechten Winkel zu den Längsträgern 4, 4' ein und weist eine Hauptausbreitungsrichtung auf, die quer zur Hauptausbreitungsrichtung der Fahrzeughauptachse liegt. Der Querträger 5 ist dabei beabstandet von der Karosserie mit den Längslenkern 4, 4' verbunden. Beabstandet von dem Verbindungspunkt zwischen dem Querträger 5 und dem jeweiligen Längslenker 4,4' ist an dem Längslenkern 4, 4' jeweils ein Anliegepunkt 6 für die Feder 7 und den Dämpfer 3 vorgesehen. Der Querlenker kann dabei mit den Längslenkern verschraubt, verklebt oder verschweißt sein. Die Längslenker 4,4' weisen dafür einen Verbindungsbereich auf, der eine insbesondere ebene Fläche bildet, an welcher der Querlenker befestigt werden kann.
Bevorzugt kann anstatt der ebenen Fläche zur Verbindung mit dem Querlenker der Längslenker eine vielflächige Kontur aufweisen, z.B. um eine Vielzahlverbindung, eine Mitnahmeverzahnung, eine Wellennutenverbindung und ähnliches zu ermöglichen.

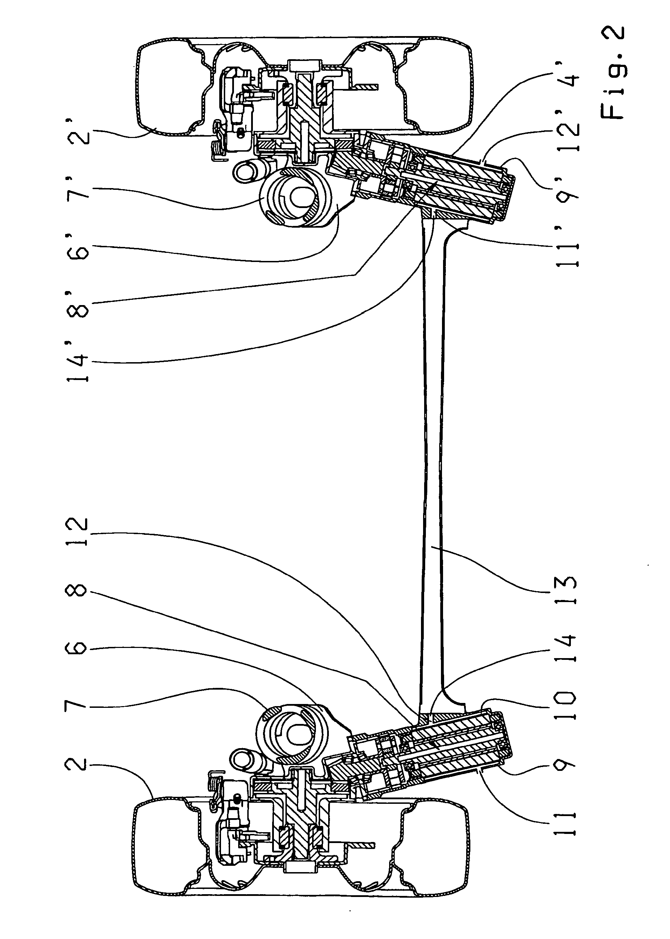

Wie in Fig. 2 gezeigt, sind an jedem Längslenker 4 bzw. 4' je ein Elektromotor 8 bzw. 8' vorgesehen, der mit einem Kühlgehäuse 9, 9' versehen ist. Das Kühlgehäuse 9 umgibt den Elektromotor 8 seitlich und weist zumindest eine Kühlleitung 10 auf, die mit einem Kühlfluidzufluss 11 und einem Kühlfluidabfluss 12 versehen ist. In dem Kühlfluidzufluss 11 des Elektromotorgehäuses 9 wird ein Kühlfluid von einer Pumpe in die Kühlfluidleitung 10 des Kühlgehäuses 9 gepumpt. Dort nimmt das Kühlfluid die Wärme des Elektromotors auf und verlässt das Gehäuse 9 über den Kühlfluidabfluss 12 in den Querträger 5 mittels der Kühlfluidverbindungsleitung 13. Dazu weist der Querträger 5 stirnseitig eine Öffnung auf, die mit einer mittig in dem Querträger 5 verlaufenden Fluidleitung verbunden ist und in einer ebenfalls stirnseitig auf der anderen Seite des Querträgers 5 angeordneten Öffnung 14' endet. Die Öffnung 14' ist mit dem Kühlfluidzufluss 11' des Gehäuses 10' des Elektromotors 9' verbunden, so dass über die Kühlfluidverbindungsleitung ein Kühlfluid in die Kühlfluidleitung des Elektromotorgehäuses 10' gelangen kann. Dort nimmt das Kühlfluid die Wärme des Elektromotors 9' auf und verlässt über den Kühlfluidabfluss 12' das Gehäuse des Elektromotors 8'. Das Kühlfluid gelangt im Weiteren über eine Kühlfluidleitung zu einem Reservoir bzw. einer Pumpe, die hier nicht gezeigt sind.

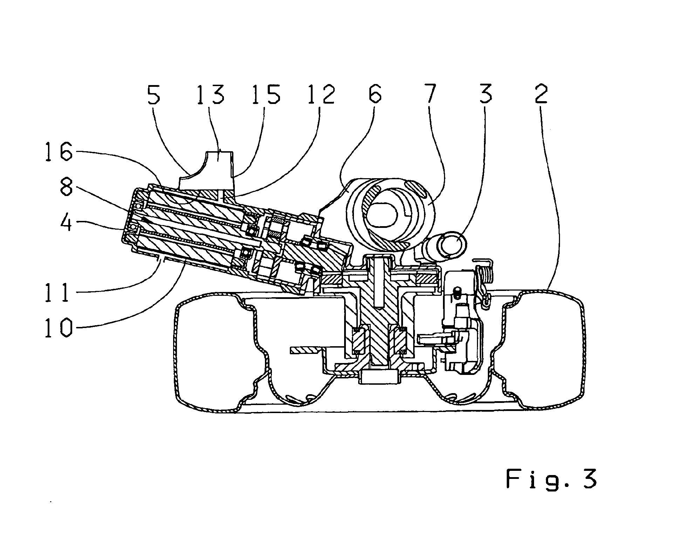

In Fig. 3 ist die Kühlvorrichtung des Elektromotors 9 näher gezeigt. Fig. 3 zeigt einen Längslenker 4, indem ein Elektromotor 8 angeordnet ist. Der Elektromotor 8 ist dabei längs in dem Längsträger 4 befestigt und treibt über ein Kegelrad das Rad 2 an. Um den Elektromotor 8 befindet sich ein Gehäuse 9, welches den Elektromotor 9 zumindest seitlich umgibt und große Teile des Längslenkers 4 bildet. Das Gehäuse ist dabei aus einem Material das gut Wärme leitet, wie Metall, so dass die Wärme des Elektromotors von dem Gehäuse aufgenommen wird. In dem Gehäuse 9 sind Fluidleitungen 10 angeordnet, in denen ein Kühlfluid strömt. So kann die Wärme, die vom Gehäuse aufgenommen wird, weiter an das Kühlfluid abgegeben werden. Die Fluidleitungen 10 können dabei viele Formen annehmen. Hier sind sie im Querschnitt röhrenförmig gezeichnet.

Die Fluidleitungen 10 weisen dabei einen gemeinsamen Kühlfluidzufluss 11 und Kühlfluidabfluss 12 auf. An dem Kühlfluidzufluss 11 kann ein Kühlfluid in die Fluidleitung 10 einströmen und durch die Fluidleitung 10 im Gehäuse 9 in der Nähe des Elektromotors 8 geführt werden. Die Fluidleitung 10 verlässt an der radabgewandten Seite des Längslenkers 4 das Gehäuse 9 über den Kühlfluidabfluss 12, welcher in einem Anschluss für den Querträger 5 eingefügt ist. Der Kühlfluidabfluss 12 ist dabei ebenfalls röhrenförmig und mit der Fluidleitung 10 verbunden. Der Kühlfluidabfluss 12 führt das vom Elektromotor 8 erwärmte Kühlmittel dem Kühlmittelfluidverbindungsleitung 13 zu. Die Kühlmittelfluidverbindungsleitung 13 ist dabei in dem Querträger 5 integriert und verläuft in der Mitte des Querträgers 5 entlang der Hauptausbreitungsrichtung des Querträgers 5. Der Querträger 5 weist eine gerade Stirnfläche 15 auf, welche mit einer Befestigungsfläche 16 des Längsträgers 4 verbunden ist. Dabei können die beiden Flächen miteinander verklebt, verschraubt und/oder verschweißt werden.

Auch kann der Querträger mit einer Polygon- und/oder Vielzahl- und/oder Mitnahmeverzahnung mit dem Längslenker verbunden sein.

Auch ist eine Wellennabenverbindung möglich.

Der Längsträger 4 weist weiter eine Befestigungsfläche 16 auf, auf der eine Feder 7 und ein Dämpfer 3 zur Dämpfung der vertikalen Radbewegung angeordnet ist.

### Bezugszeichen

- 1: Verbundlenker
- 2: Rad
- 2': Rad
- 3: Dämpfer
- 4: Längslenker
- 5: Querträger
- 6: Befestigungsbereich für die Achsfeder
- 7: Feder
- 8: Elektromotor
- 8': Elektromotor
- 9: Kühlgehäuse
- 9': Kühlgehäuse
- 10: Kühlleitung
- 10': Kühlleitung
- 11: Kühlfluidzufluss
- 11': Kühlfluidzufluss
- 12: Kühlfluidabfluss
- 12': Kühlfluidabfluss
- 13: Kühlfluidverbindungsleitung
- 14: Öffnung
- 14': Öffnung
- 15: Stirnfläche des Querträgers
- 16: Befestigungsfläche

## Patentansprüche

1. Vorrichtung zum Antrieb eines Fahrzeugs, umfassend zumindest zwei Elektromotoren (9, 9'), wobei jeder der zumindest zwei Elektromotoren (9, 9') mit einer Kühlvorrichtung versehen ist und die Kühlvorrichtung zumindest eine Kühlfluidleitung (10, 10') umfasst, wobei die Kühlfluidleitungen (10,10') der zumindest zwei Kühlvorrichtungen über eine Kühlfluidverbindungsleitung (13) verbunden sind,
**dadurch gekennzeichnet, dass**
die zumindest zwei Elektromotoren (9,9') an einem Verbundlenker (1) angeordnet sind, wobei die Längslenker größtenteils durch die Elektromotoren oder die Gehäuse der Elektromotoren gebildet sind.

2. Vorrichtung nach Anspruch 1, **dadurch gekennzeichnet, dass** der Verbundlenker (1) zumindest zwei Längslenker (4,4') und zumindest einen Querträger (5) umfasst und die Kühlfluidverbindungsleitung (13) an einem Querträger (5) angeordnet ist.

3. Vorrichtung nach Anspruch 2, **dadurch gekennzeichnet, dass** der Querträger mit einer Polygonverzahnung mit dem Längslenker verbunden ist.

4. Vorrichtung nach einem der vorhergehenden Ansprüche, **dadurch gekennzeichnet, dass** die Kühlfluidverbindungsleitung in dem Querträger (5) angeordnet ist.

5. Vorrichtung nach einem der Ansprüche 1 bis 4, **dadurch gekennzeichnet, dass** die Kühlfluidverbindungsleitung zumindest teilweise durch den Querträger (5) gebildet ist.

6. Vorrichtung nach einem der Ansprüche 1 bis 5, **dadurch gekennzeichnet, dass** die zumindest zwei Elektromotoren (9,9') mit einer Kühlfluidleitung (10,10') versehen sind, die einem Kühlfluidzufluss (11,11') und einer Kühlfluidabfluss (12,12') aufweisen und der Kühlfluidzufluss (11) der Kühlfluidleitung des einen Elektromotors mit dem Kühlfluidabfluss (12) der Kühlfluidleitung des anderen Elektromotors über die Kühlverbindungsleitung (13) verbunden ist.

7. Vorrichtung nach einem der Ansprüche 2 bis 6, **dadurch gekennzeichnet, dass** die zwei Elektromotoren (9,9') an den Längslenkern (4,4') des Verbundlenkers (1) angeordnet sind.

8. Vorrichtung nach einem der Ansprüche 1 bis 7, **dadurch gekennzeichnet, dass** die Kühlfluidverbindungsleitung (5) Kühlelemente zur Kühlung des Kühlfluids aufweist.

9. Vorrichtung nach Anspruch 8, **dadurch gekennzeichnet, dass** die Kühlfluidverbindungsleitung (5) derart ausgearbeitet ist, dass das darin geleitete Kühlfluid durch den Fahrtwind gekühlt werden kann.

10. Fahrzeug umfassend eine Antriebsvorrichtung nach einem der Ansprüche 1 bis 9.

## Claims

1. Apparatus for driving a vehicle, comprising at least two electric motors (9, 9'), each of the at least two electric motors (9, 9') being provided with a cooling device, and the cooling device comprising at least one cooling-fluid line (10, 10'), the cooling-fluid lines (10, 10') of the at least two cooling devices being connected via a cooling-fluid connecting line (13), **characterized in that** the at least two electric motors (9, 9') are arranged on a composite control arm (1), the longitudinal control arms being formed for the most part via the electric motors or the housings of the electric motors.

2. Apparatus according to Claim 1, **characterized in that** the composite control arm (1) comprises at least two longitudinal control arms (4, 4') and at least one crossmember (5), and the cooling-fluid connecting line (13) is arranged on the crossmember (5).

3. Apparatus according to Claim 2, **characterized in that** the crossmember is connected to the longitudinal control arm by means of a polygonal interlock.

4. Apparatus according to one of the preceding claims, **characterized in that** the cooling-fluid connecting line is arranged in the crossmember (5).

5. Apparatus according to one of Claims 1 to 4, **characterized in that** the cooling-fluid connecting line is formed at least partially by the crossmember (5).

6. Apparatus according to one of Claims 1 to 5, **characterized in that** the at least two electric motors (9, 9') are provided with a cooling-fluid line (10, 10'), which cooling-fluid lines have a cooling-fluid inflow (11, 11') and a cooling-fluid outflow (12, 12'), and the cooling-fluid inflow (11) of the cooling-fluid line of one electric motor is connected to the cooling-fluid outflow (12) of the cooling-fluid line of the other electric motor via the cooling-fluid connecting line (13).

7. Apparatus according to one of Claims 2 to 6, **characterized in that** the two electric motors (9, 9') are arranged on the longitudinal control arms (4, 4') of the composite control arm (1).

8. Apparatus according to one of Claims 1 to 7, **characterized in that** the cooling-fluid connecting line (5) has cooling elements for cooling the cooling fluid.

9. Apparatus according to Claim 8, **characterized in that** the cooling-fluid connecting line (5) is fashioned in such a way that the cooling fluid conducted in it can be cooled by the relative wind.

10. Vehicle, comprising a drive apparatus according to one of Claims 1 to 9.

## Revendications

1. Dispositif d'entraînement d'un véhicule, comportant au moins deux moteurs électriques (9, 9'), chacun des au moins deux moteurs électriques (9, 9') étant pourvu d'un dispositif de refroidissement et le dispositif de refroidissement comportant au moins une conduite de fluide de refroidissement (10, 10'), les conduites de fluide de refroidissement (10, 10') des au moins deux dispositifs de refroidissement étant reliées par le biais d'une conduite de raccordement de fluide de refroidissement (13),
**caractérisé en ce que**
les au moins deux moteurs électriques (9, 9') sont disposés sur une traverse déformable en torsion (1), les bras oscillants longitudinaux étant formés pour la majeure partie par les moteurs électriques ou le boîtier des moteurs électriques.

2. Dispositif selon la revendication 1, **caractérisé en ce que** la traverse déformable en torsion (1) comporte au moins deux bras oscillants longitudinaux (4, 4') et au moins une traverse (5) et la conduite de raccordement de fluide de refroidissement (13) est disposée sur une traverse (5).

3. Dispositif selon la revendication 2, **caractérisé en ce que** la traverse est reliée au bras oscillant longitudinal par une denture polygonale.

4. Dispositif selon l'une quelconque des revendications précédentes, **caractérisé en ce que** la conduite de raccordement de fluide de refroidissement est disposée dans la traverse (5).

5. Dispositif selon l'une quelconque des revendications 1 à 4, **caractérisé en ce que** la conduite de raccordement de fluide de refroidissement est formée au moins partiellement par la traverse (5).

6. Dispositif selon l'une quelconque des revendications 1 à 5, **caractérisé en ce que** les au moins deux moteurs électriques (9, 9') sont pourvus d'une conduite de fluide de refroidissement (10, 10'), lesquelles conduites de fluide de refroidissement comprennent une entrée de fluide de refroidissement (11, 11') et une sortie de fluide de refroidissement (12, 12'), et l'entrée de fluide de refroidissement (11) de la conduite de fluide de refroidissement de l'un des moteurs électriques est reliée à la sortie de fluide de refroidissement (12) de la conduite de fluide de refroidissement de l'autre moteur électrique par le biais de la conduite de raccordement de fluide de refroidissement (13).

7. Dispositif selon l'une quelconque des revendications 2 à 6, **caractérisé en ce que** les deux moteurs électriques (9, 9') sont disposés sur les bras oscillants longitudinaux (4, 4') de la traverse déformable en torsion (1).

8. Dispositif selon l'une quelconque des revendications 1 à 7, **caractérisé en ce que** la conduite de raccordement de fluide de refroidissement (5) comprend des éléments de refroidissement pour le refroidissement du fluide de refroidissement.

9. Dispositif selon la revendication 8, **caractérisé en ce que** la conduite de raccordement de fluide de refroidissement (5) est élaborée de telle sorte que le fluide de refroidissement qui est guidé dans celle-ci puisse être refroidi par le vent relatif.

10. Véhicule comportant un dispositif d'entraînement selon l'une quelconque des revendications 1 à 9.
